## Europäisches Patentamt
## European Patent Office
## Office européen des brevets

(19)

(11) Numéro de publication: **0 042 801**

**A1**

(12) # DEMANDE DE BREVET EUROPEEN

(21) Numéro de dépôt: 81400995.7

(22) Date de dépôt: 19.06.81

(51) Int. Cl.³: **B 66 D 1/58**
**F 16 H 35/10**

(30) Priorité: 19.06.80 FR 8013604

(43) Date de publication de la demande:
30.12.81 Bulletin 81/52

(84) Etats contractants désignés:
AT BE CH DE GB IT LI LU NL SE

(71) Demandeur: Etablissements Huchez & Cie
Ferrieres
F-60420 Maignelay(FR)

(72) Inventeur: Huchez, André
Ferrieres
F-60420 Maignelay(FR)

(72) Inventeur: Huchez, Philippe
Ferrieres
F-60420 Maignelay(FR)

(74) Mandataire: Chevallier, Robert
Cabinet BOETTCHER 23, rue La Boétie
F-75008 Paris(FR)

(54) **Dispositif de sécurité de transmission par engrenages.**

(57) L'invention concerne un dispositif de sécurité de transmission par engrenages. Un arbre moteur (2) entraîne un tambour (4) de treuil (5) par l'intermédiaire d'une transmission (1) comprenant un arbre intermédiaire (8) monté coulissant contre la force d'un ressort (18) portant une roue dentée cylindrique à denture hélicoïdale engrenant avec une roue dentée (14) de l'arbre de transmission (3). Pour un couple donné par la tare du ressort (18), l'arbre intermédiaire (8) actionne un dispositif (19) de coupure d'alimentation du moteur.

EP 0 042 801 A1

Dispositif de sécurité de transmission par engrenages.

L'invention concerne un dispositif de sécurité de transmission par engrenages entre un arbre moteur primaire et un arbre de transmission dans lequel une roue de transmission à denture hélicoïdale est montée axia- lement coulissante contre la force d'un organe élastique taré, tel qu'un ressort, agissant en sens inverse de la composante axiale du couple de transmission auquel est soumis ladite roue, ledit dispositif comportant un organe sensible à la position de ladite/roue contre la force de l'organe élastique.

Des dispositifs de ce type sont connus comme particulièrement utiles pour limiter la valeur de couples de transmission ou pour arrêter un moteur en cas de charge trop forte. Une application concerne plus particulièrement l'entraînement des treuils de levage ou de halage. Un dispositif de ce type a été décrit dans le brevet français n° 1 397 632, dans lequel l'arbre moteur entraîne une vis sans fin pouvant coulisser comme il est dit au début et entraînant directement un arbre secondaire perpendiculaire à l'arbre moteur. Mais la construction d'un tel dispositif est compliquée et coûteuse, ne serait-ce que par la fabrication d'une vis sans fin ; le rendement de la transmission par axes orthogonaux par vis sans fin n'est pas bon et les frottements sont importants. De plus son coût est élevé à cause des materiaux employés et aussi par son usinage compliqué.

Le but de l'invention est de proposer un nouveau dispositif de sécurité de transmission par engrenages, évitant les inconvénients précités, c'est-à-dire simple et peu coûteux à fabriquer, à bon rendement de transmission et permettant d'utiliser des aciers moins coûteux et faciles à usiner.

Ces buts sont atteints, par un dispositif du type décrit au début, grâce au fait qu'il est constitué en dispositif à démultiplication par engrenages à axes parallèles à au moins un arbre intermédiaire entre l'arbre moteur primaire et l'arbre de transmission, et l'un au moins des trains d'engrenage est à denture hélicoïdale et comprend ladite roue montée axialement coulissante.

Bien que le dispositif de l'invention utilise des roues dentées à denture hélicoïdale, on évite complètement la mise en oeuvre de vis sans fin, c'est-à-dire de vis dont un filet unitaire se développe sur plus de 360°. Si, comme c'est l'usage, l'inclinaison de la denture est de 8 à 30° environ par rapport à l'axe, chaque filet unitaire ne se développera que sur un petit secteur, par exemple 15 à 60°, ce qui ne présente pas de difficultés d'usinage.

Il est avantageux que la roue à denture hélicoïdale montée axialement coulissante soit l'une des roues d'arbre secondaire et qu'elle soit calée sur ledit arbre secondaire qui est alors monté coulissant.

Dans un dispositif dans lequel l'arbre moteur primaire est entraîné par un moteur, il est conforme à l'invention que l'organe sensible à la position axiale de la roue montée axialement coulissante actionne une commande d'arrêt du moteur, de préférence par l'intermédiaire d'un dispositif à retardement et/ou amortissement.

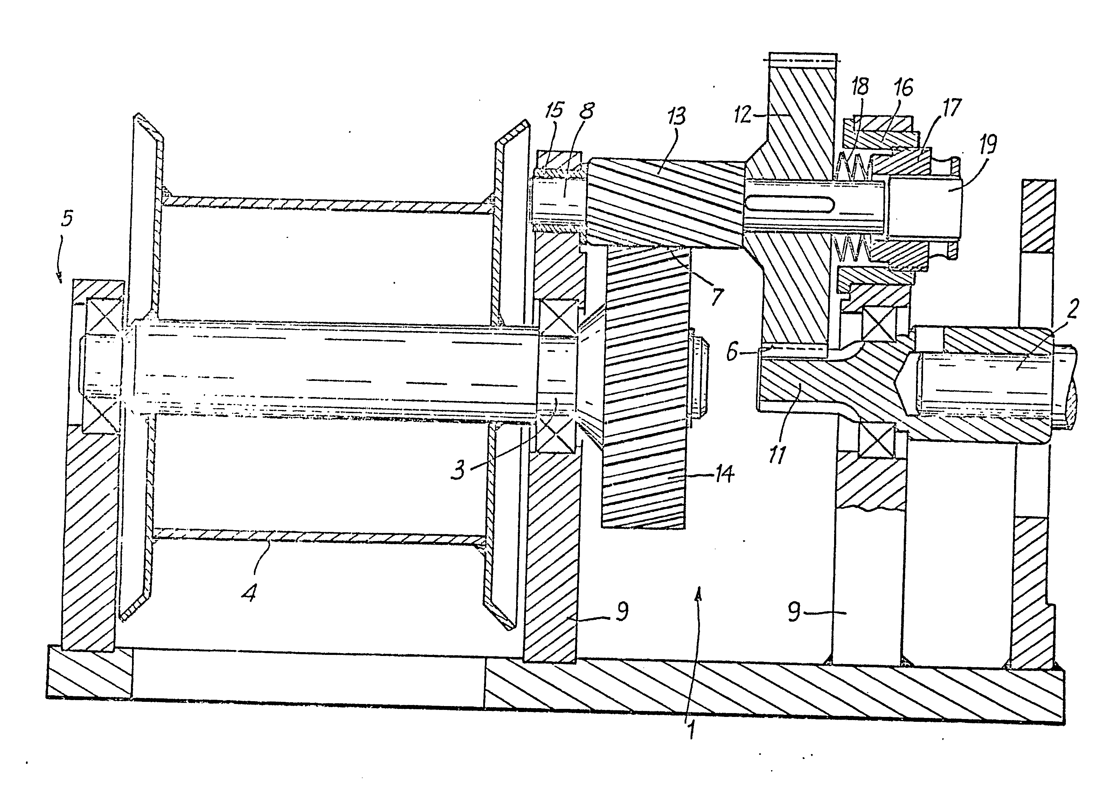

D'autres caractéristiques et avantages ressortiront de la description, qui sera donnée ci-après uniquement à titre d'exemple, d'un mode de réalisation de l'invention. On se reportera à cet effet à la figure unique annexée, qui représente en coupe axiale un treuil équipé d'un dispositif de sécurité de transmission par engrenage selon l'invention représenté en coupe selon le plan passant par les axes des arbres primaire et d'entraînement alignés et par l'axe de l'arbre intermédiaire unique.

Un dispositif de l'invention est constitué par une transmission 1 de démultiplication par engrenages entre un arbre moteur primaire 2 et un arbre de transmission 3, d'entraînement d'un tambour 4 d'un treuil 5, liés cinématiquement par deux trains d'engrenages, respectivement 6 et 7 par l'intermédiaire d'un arbre intermédiaire 8. Le premier train 6 réducteur d'engrenage comprend une roue dentée 11 calée sur l'arbre moteur 2 engrenant dans le rapport d'environ 1/4,7 avec une roue dentée 12 calée sur l'arbre intermédiaire 8 pour entraîner une roue dentée 13, également calée sur l'arbre intermédiaire 8, engrenant dans le rapport d'environ 1/3,6 avec une roue dentée 14 calée sur l'arbre d'entraînement 3 du tambour 4 du treuil 5. Le train d'engrenage 7 est constitué par des roues dentées 13 et 14 cylindriques à denture hélicoïdale à inclinaison de denture de 8 à 30° par rapport à leurs axes respectifs. L'arbre intermédiaire 8 portant les roues dentées 12 et 13 est monté sur deux paliers 15 et 16 alignés du bâti 9 portant le treuil 5 et le dispositif de transmission 1. Il est monté à coulissement axial entre deux butées, un ressort d'expansion 18 étant monté entre la roue dentée 12 et un bouchon d'extrémité 17 et tendant à repousser l'arbre 8 et ses roues dentées 12 et 13 vers la gauche selon la figure. L'axe 8 peut donc coulisser entre deux positions extrêmes correspondant à la course de compression du ressort 18. Lorsque l'arbre moteur 2 entraîne le treuil, l'entraînement de la roue dentée 14 par la roue dentée 13 résulte du couple transmis. Mais du fait de l'inclinaison des dentures, le couple de réaction sur la roue dentée 13 a une composante axiale qui, par le choix du sens de l'inclinaison des dentures, est dirigée contre la force du ressort. A partir d'une valeur de couple, fixée à la fois par l'inclinaison des dentures et par le tarage du ressort 18, l'extrémité de l'arbre 8, à droite sur la figure, vient actionner un dispositif 19, d'un type connu en soi, de coupure d'alimentation du moteur, dans lequel est incorporé un dispositif, également d'un type connu en soi, d'amortissement ou de retardement, dont le rôle est d'éviter les coupures intempestives d'alimentation au moment des à-coups.

REVENDICATIONS

1) Dispositif de sécurité de transmission par engrenages entre un arbre moteur primaire (2) et un arbre de transmission (3) dans lequel une roue de transmission à denture hélicoïdale (13) est montée axialement coulissante contre la force d'un organe élastique taré, tel qu'un ressort (18), agissant en sens inverse de la composante axiale du couple de transmission auquel est soumise ladite roue (13), ledit dispositif comportant un organe sensible (19) à la position de ladite roue (13) contre la force de l'organe élastique, caractérisé en ce qu'il est constitué en dispositif (1) à démultiplication par engrenages à axes parallèles à au moins un arbre intermédiaire (8) entre l'arbre moteur primaire (2) et l'arbre de transmission (3), et l'un au moins des trains d'engrenage (7) est à denture hélicoïdale et comprend ladite roue (13) montée axialement coulissante.

2) Dispositif selon la revendication 1, caractérisé en ce que la roue à denture hélicoïdale (13) montée axialement coulissante est l'une des roues d'arbre secondaire (8).

3) Dispositif selon la revendication 2, caractérisé en ce que la roue (13) à denture hélicoïdale montée axialement coulissante est calée sur son arbre secondaire (8) qui est monté coulissant.

4) Dispositif selon la revendication 1, dans lequel l'arbre moteur primaire (2) est entraîné par un moteur, caractérisé en ce que l'organe sensible (19) à la position axiale de la roue (13) montée axialement coulissante actionne une commande d'arrêt du moteur.

5) Dispositif selon la revendication 4, caractérisé en ce que l'organe sensible (19) à la position axiale de la roue (13) montée axialement coulissante actionne une commande d'arrêt du moteur par l'intermédiaire d'un dispositif à retardement et/ou amortissement.

Office européen
des brevets

**RAPPORT DE RECHERCHE EUROPEENNE**

| Catégorie | Citation du document avec indication, en cas de besoin, des parties pertinentes | Revendication concernée |
|---|---|---|
| **DOCUMENTS CONSIDERES COMME PERTINENTS** | | |
| X | US - A - 3 675 751 (FORTNER)<br><br>* colonne 2, lignes 42-75; figure 1 *<br><br>--- | 1,2,4 |
| X | DE - C - 701 034 (DEMAG)<br><br>* page 2, lignes 30-78; figures 1 et 2 *<br><br>--- | 1,2,4 |
|  | CH - A - 284 877 (MERCIER)<br><br>* revendication et première sous-revendication; figures 2,3 *<br><br>--- | 1,2,3 |
|  | CH - A - 259 542 (SULZER)<br><br>* page 2, lignes 95 et 96; page 3, lignes 1-23; figure 4 *<br><br>--- | 1,3,4 |
| A | DE - A - 2 635 612 (WESERHUTTE) | 1 |
| A | US - A - 2 322 371 (LETOURNEAU) | 1 |
| A | US - A - 1 925 474 (WILSING) | 1 |
| A | GB - A - 283 402 (AXIEN ZAHNRADER-FABRIK) | 1 |

--------

**CLASSEMENT DE LA DEMANDE (Int. Cl.³)**

B 66 D   1/58
F 16 H  35/10

**DOMAINES TECHNIQUES RECHERCHES (Int. Cl.³)**

B 66 D
F 16 H

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 24-09-1981 | FERRANTI |

OEB Form 1503.1   06.78